# EUROPEAN PATENT APPLICATION

(11) **EP 3 839 864 A1**
(43) Date of publication of application: **23.06.2021**
(21) Application number: 19383169.0
(22) Date of filing: 20.12.2019
(51) Int. Cl.: G06Q 30/02

(54) **METHOD AND SYSTEM FOR MORE EFFICIENT USER'S IRREGULAR DAYS DETECTION FROM MONITORED DATA**

(71) Applicant: Koa Health B.V., 1097 JV, Amsterdam (NL)
(72) Inventor: BUDA, Teodora, Sandra, 28050 MADRID (ES); MATIC, Aleksandar, MADRID 28050 (ES); HARRISON, Oliver, 28050 MADRID (ES)
(74) Representative: Herrero & Asociados, S.L.

(57) **Abstract**

A method and system for efficient detection of user's irregular days (exceptionally good or bad days) for inferring positive and negative drivers associated with those irregular days. The proposed embodiments allow to detect positive and negative outlier days and what drives those days as being exceptionally good or bad, thus reaching a list of personalized recommendations

## Description

### Field of the invention

The present invention has its application within the telecommunications sector, more specifically, relates to the deployment of tools using electronic devices and communication electronic devices (e.g., computers, PCs, mobile user terminals such as smartphones, tablets, or tablets or for wearable electronic devices, computers, etc.) which monitor and send user's parameters and/or interact with the user, to detect good or bad irregular (exceptional) days. More particularly, the present invention relates to a method and electronic system for an efficient measurement, modelling and detection of a user's irregular days, which allows to derive accurate recommendations.

### Background of the invention

An accurate mechanism for detecting user's irregular days (also referred to as outlier days) in user's life, will be very useful as it would allow inferring positive and negative drivers associated with those days and deriving recommendations. That is, by accurately detecting positive and negative outlier days and what drives those days as being exceptionally good or bad, it would be possible to reach a list of personalized effective recommendations (as for example, device use behaviour recommendations or health recommendations, among others).

However, it is not easy to label something as an outlier or not, as in most of the cases, it depends on several factors as the type of data under analysis, its value and distribution, the specific behaviour of the user... Actually, none of the prior art solutions perform an accurate detection of these irregular days.

For example, US20120130196A1 discloses a method for receiving and recording inputs identifying a mood of a person, a mood intensity level of the mood, an activity of the person coinciding with the mood, and time of the mood. Or US6539249B1 discloses a method which assesses the status of well-being of patients being treated for congestive heath failure (CHF) using cardiac pacing as a therapy. By sampling the output from an activity sensor or the like, and by noting the frequency with which the averaged rectified sensor output exceeds a pre-set threshold following changes in the pacing mode, the efficacy of the new mode compared to the previous one can be evaluated.

These and all the existing solutions use raw values of the user's data and thus produce models that are hard to be transferred to different solutions due to the variability in the sensors' types. Moreover, existing state of the art only uses labelling approaches on the target feature for labelling outlier days and train the model typically using the raw values of the features. Moreover, none of the prior art approaches explore the optimal labelling approach for reaching the best results for detecting outlier days.

A need therefore exists for a method and system for detecting user's outlier days in an accurate, personalised and resources saving way, allowing to derive accurate recommendations.

### Summary of the invention

The problems found in prior art techniques are generally solved or circumvented, and technical advantages are generally achieved, by the disclosed embodiments which provide a method and system for efficient detection of an user's irregular days (from example, from the user's well-being point of view or from any physical aspect which may affect the user's life) for inferring positive and negative drivers associated with those irregular days (exceptionally good or bad days, also referred to as outlier days), comprising user data collection, outlier analysis, outlier detection, positive and negative drivers detection and deriving recommendations. The proposed embodiments allow to detect positive and negative outlier days and what drives those days as being exceptionally good or bad, thus reaching a list of personalized recommendations.

One of the basis of the proposed mechanisms is that during an irregular day, the user's electronic devices' (phone, laptop, PC, tablet, TV,... or any other type of electronic device) usage patterns will be irregular as well. Moving away from raw sensors values, the method builds synthetic input features based on labelling the (sensor(s)) measured data as regular or irregular for each day. These synthetic features will represent encodings for regular or irregular behaviour. Yet, one of the main challenges is how to label something as an outlier or not, as in many cases this depends on the dataset under analysis, considering its distribution and other properties.

The proposed embodiments aim to tackle this through an explorative search and given a target-labelled dataset where past measurements (for example, of wellbeing) are measured, the method is able to infer and apply the most suitable labelling approach and build synthetic input and target features accordingly to optimize for best results in terms of irregular days detection. The target features will be the user features (typically features related to the user wellbeing as, for example, happiness, anxiety, health state...) which are to be estimated from the input user features.

Using those synthetic features instead, the method trains a machine learning model that is able to predict whether the user has an irregular day, such as an exceptionally good or bad day. Further the system extracts the drivers of those behaviours to guide future personalized interventions. The system could be applied to a range of services to improve user's life, for example, user's wellbeing.

The proposed embodiments have several applications. For example, they allow to identify and anticipate when a user is having a worse day than normal and might benefit from an intervention to improve his/her life (for example, his/her wellbeing), and they allow to identify personal drivers from the outlier good days for that user that might drive more personalized interventions. Specifically, it will be interesting to discover which factors influence good or bad days. The activities people performed during bad and good days can serve as guidelines for the interventions as good/bad drivers for the users' behaviour can be identified and personalized for the user. Personalization is an important aspect since the proposed embodiments will consider outlier days for each user considering his/her own patterns of behaviour, and also compared to the entire population, including for deriving wellbeing and drivers for those good/bad days. Moreover, the system does not rely on raw values, which enables it to be ported to different applications with minor adjustments.

In a first aspect, it is proposed a computer implemented method for efficiently detecting outlier days of a user belonging to a group of users, the method comprising the following steps performed by one (or more) electronic device(s):
a) An electronic device receiving (e.g. through a telecommunications network) datasets of one or more features related to the user and/or to the group of users corresponding to one or more days under analysis, where at least one of said datasets have been acquired by one or more electronic devices. These electronic devices may be user electronic devices as for example, laptops, tablets, personal computers, wearable devices, portable computers, mobile phones, smartwatches, smartphones... and/or sensors usually located in said user electronic devices.
b) Labelling the dataset of each feature as regular or irregular for each day applying N labelling approaches, N>1, obtaining N labels (one per labelling approach) for each dataset (for each feature); where at least one of the labelling approaches comprises comparing the dataset of each feature with the values distribution of previously obtained datasets for said feature for the user or for the group of users;
c) For each labelling approach of the N labelling approaches of step b), use the obtained labels to train one or more machine learning (artificial intelligence) classification models (e.g. classification algorithms);
d) Selecting, based at least on the results of the one or more machine learning classification models (preferably it is used here the model with best results if more than a machine learning model is used in step c)), an optimal labelling approach from the N labelling approaches (e.g. the labelling approach which reached the best results in terms of model performance parameters); said selection can be made for each feature, so depending on the feature, the optimal labelling approach selected may differ;
e) Determining, at least based on the labels obtained with the optimal labelling approach for each feature, whether the one or more days under analysis are outlier days for the user. In an embodiment, this step further comprises determining whether a day determined as an outlier day, is a positive or a negative outlier day.

The one or more features of step a) may include one or more of (input features): usage patterns of the use of user electronic devices by the user and/or by the users of the group or users, ambient data related to location of the user or of the users of the group of users, environmental data related to the location of the user or of the users of the group of users, physiological data of the body of the user or of each user of the group of users and/or behavioural data of the user or of the users of the group of users. The environmental data may be values of at least one of the following parameters: pollution, outdoor light level, light level, weather, humidity, outdoor temperature; the behavioural data may be values of at least one of the following parameters; mobility, social interactions, sleep state; the physiological data may be values of at least one of the following parameters of the body: galvanic skin response, heart rate variability, skin temperature; and the ambient data may be values of at least one of the following parameters: indoor temperature, indoor light level, light exposure, noise level.

In an embodiment at least one of the labelling approaches comprises comparing each dataset with the i and/or 100-i percentile of the values distribution of previously obtained datasets for said feature for the user or for the group of users, where i is a design parameter.

In an embodiment at least one of the labelling approaches at least one of the labelling approaches comprises comparing each dataset with the mean or median of the values distribution of previously obtained datasets for said feature for the user or for the group of users.

In an embodiment at least one of the labelling approaches at least one of the labelling approaches comprises comparing each dataset with the variance of the values distribution of previously obtained datasets for said feature for the user or for the group of users.

The one or more features of step a) may also include at least one wellbeing feature (target feature) of the user or of the group of users, estimated from one or more of the receiving datasets measured by one or more electronic devices (input features).

The method may further comprise determining the relevancy of the features whose data is received in step a) for the determination that a day is an (positive or negative) outlier day made in step e); and deriving user recommendations (to improve his/her wellbeing) based on the determined relevancy for each received feature (where said recommendations may be sent to a user electronic device through a telecommunications network).

The method may be performed by an user electronic device (or more than one, interacting between them) or it may be performed in a remote electronic device (a server) and the one or more user electronic devices acquiring the datasets of features related to the user or to the group of users, send through a communications network the acquired data to the server.

In an embodiment, the datasets are acquired using at least one of the following electronic devices: usage logs or sensors embedded in a user communications device, wearable electronic devices with sensors to measure body signals, presence sensors, location sensors, smart environments devices, bed-sensors, environment sensors to monitor environment parameters such as temperature, air quality or weather information.

In an embodiment, before step b) the datasets are pre-processed using one or more data pre-processing techniques.

In an embodiment, the acquisition of at least one of the datasets in step a) comprises: periodically presenting to the user or to each user of the group, through the user interface of one or more user electronic devices, a questionnaire previously received in the user electronic device(s); and receiving, through the user interface of the user electronic device, answers to said questionnaire from the user or from each user of the group.

In a second aspect, it is proposed systems for performing any of the above stated methods. For example, it is proposed an electronic system for efficiently detecting outlier days of a user belonging to a group of users, the system comprising:
- Communication means for receiving, through one or more communications network, datasets of one or more features related to the user and/or to the group of users corresponding to one or more days under analysis, where at least one of said datasets have been acquired by one or more electronic devices;
- Processing means configured to:
   - Label the dataset of each feature as regular or irregular for each day applying N labelling approaches, N>1, obtaining therefore N labels for each dataset for each feature; where at least one of the labelling approaches comprises comparing the dataset of each feature with the values distribution of previously obtained datasets for said feature for the user or for the group of users;
   - For each labelling approach, use the obtained labels to train one or more machine learning classification models;
   - Select, based at least on the results of the one or more of the machine learning classification models, an optimal labelling approach from the N labelling approaches for the features;
   - Determine, based at least on the labels obtained with the optimal labelling approach for the datasets, whether the one or more days under analysis is an outlier day for the user

In a last aspect of the present invention, a computer program is disclosed, comprising computer program code means adapted to perform the steps of the described methods, when said program is run on processing means, said processing means being for example a computer, a digital signal processor, a field-programmable gate array (FPGA), an application-specific integrated circuit (ASIC), a micro-processor, a micro-controller, or any other form of programmable hardware. In other words, a computer program comprising instructions, causing a computer executing the program to perform all steps of the described method, when the program is run on a computer. A digital data storage medium is also provided for storing a computer program comprising instructions, causing a computer executing the program to perform all steps of the disclosed methods when the program is run on a computer.

### Description of the drawings

For the purpose of aiding the understanding of the characteristics of the invention, according to a preferred practical embodiment thereof and in order to complement this description, the following figures are attached as an integral part thereof, having an illustrative and non-limiting character:
Figure 1 shows a schematic graphic showing the distribution (left figure) and box (right figure) plot of a target feature (happiness) depicting positive outlier days for an individual.
Figure 2 shows a schematic block diagram of the system architecture according to an embodiment of the present invention.
Figure 3 shows a flow diagram of the proposed solution according to an embodiment of the invention.
Figure 4 shows a block flow of possible applications of the results achieved by the proposed embodiments of the invention.

### Detailed description of embodiments of the invention

The matters defined in this detailed description are provided to assist in a comprehensive understanding of the invention. Accordingly, those of ordinary skill in the art will recognise that variation changes and modifications of the embodiments described herein can be made without departing from the scope of the invention. Also, description of well-known functions and elements are omitted for clarity and conciseness.

Note that in this text, the term "comprises" and its derivations (such as "comprising", etc.) should not be understood in an excluding sense, that is, these terms should not be interpreted as excluding the possibility that what is described and defined may include further elements, steps, etc.

Of course, the embodiments of the invention can be implemented in a variety of architectural platforms, operating and server systems, devices, systems, or applications. Any particular architectural layout or implementation presented herein is provided for purposes of illustration and comprehension only and is not intended to limit aspects of the invention.

The proposed embodiments provide a method and system for efficient and accurate detection of irregular days (also referred to as outlier days) of an individual (called here generically, a user). In order to do so, the proposed method and system is able to accurately select the optimal labelling approach for a given dataset for applying anomaly detection and detecting the outlier days for an individual.

The data in which the detection is based can be any data (any feature) related to the user and/or to a group of users. This data can be obtained by any type of electronic sensors or electronic devices. From these electronic sensors or electronic devices measuring the data, the data will be sent (for example, through any (tele)communications network) to the electronic device(s) performing the proposed method. In an embodiment, this data will be data obtained from users' electronic devices (phone, laptop, PC, tablet, TV, smartwatch... or any other type of electronic device); for example, the usage patterns of said electronic devices by the user and/or by a group of users.

The group of users whose data is used can be any group of users to which the user may be classified or may have something in common. For example, users using the same service, users to whom the wellbeing is also being estimated, users from the same location (city, neighbourhood...) of the user, users with the same professional activity of the user...or any combination of them.

The data monitored and used by the proposed system are captured from one or more sources of data (that is, using one or more electronic devices which obtain the value of said parameters), as for example (this is a non-limitative and other sources of data may be used):
- In order to ask questions to the user (e.g. in the form of a survey or a questionnaire) and to receive direct user inputs (e.g. answers to the questions asked to the user) a communications device (also called user's communications device or simpler, user's device) is used. The users' communications device may be any electronic communication device as for example a laptop, a tablet, a personal computer, a portable computer, a mobile phone, a smart phone, any personal communications device or, generally speaking, any electronic communications device. The user's communications device must have an electronic user's interface (for example, a screen, a keyboard, a speaker, a microphone...) in order to be able to asks the questions to the user and receive his/her answers.
- Usage logs or sensors embedded in personal devices (for example hand-held devices) such as wearable devices, hand-held devices as mobile phones, smart phones, tablets, laptops, smartwatches ... and similar. This device may be the user's communications device employed to ask questions and receive inputs of the user or a different device. That is, the user's communication device (for example, his/her mobile phone) can be used also to monitor other parameters besides direct user inputs (for example, body signals of the user as heart rate, ambient parameters as light level, environmental factors, behaviour parameters as social interactions...).
- Dedicated body sensors to measure body signals. Said dedicated body sensors may be included in wearable electronic devices as for example smartwatches, bracelets (e.g. fitbit, jawbone...), clips (e.g. fitbit) or any other type of wearable electronic devices which can be worn by the user.
- Ambient (indoor) sensors such as presence sensors, location sensors, smart environments devices, bed-sensors, etc.
- Environment (outdoor) sensors to monitor environment parameters such as temperature, air quality, weather information and any other environment parameters.
- External sources (such as dedicated data-base, news, social networks, ...)
- And generally speaking any known electronic device which may be used to obtain the value of the parameters used by the system. As it can be seen, a single electronic device can be used to obtain the value of different type of parameters (for example, a wearable device can be used to obtain body signals, but also environmental factors... or the mobile phone can be used to obtain direct inputs from the user but also body signals, ambient parameters, environmental factors, behaviour parameters...

All of this data captured over time (that is, collected over a certain period of time, e.g. a week, a month, a year...) is stored. That is all the parameter values obtained by the different electronic devices are sent by said electronic devices to a database. This data base may be internal to one of these electronic devices (for example, the user's communications device) or may be external to all the electronic devices used to obtain this data (for example, in a remote server). The electronic devices used to obtain this longitudinal data should have a communication interface which allows the electronic device to communicate the obtained data to the database (directly or through another electronic device) over a communications network. The communications network may be a wireless communications network, a mobile communications network as GSM 2G, GPRS, UMTS, 3G, 4G or LTE, LAN or W-LAN or any other type of wired or wireless communication networks.

Three cases of irregular behaviour may be considered to detect the irregular days:
- Irregular days (irregular behaviour) considering the normal behavioural patterns of the user. These irregular days are defined with respect to the normal distribution of data values of the individual. For example, when the user will generally have good or bad days, however, due to disturbances in their daily activities, their typical (subjective) well-being score of that day can be impacted (for instance a work day that exceeds 10 hours due to a stressful deadline can result in a poor score for subjective well-being for that day).
- Irregular days considering the normal behavioural patterns of the population (or generally speaking to a group of users). These irregular days are defined with respect to the normal distribution of data values of the population/group (e.g., when the user has a good or a bad day compared to the distribution of values of the entire population/group). Here the population taken may be a significant number of individuals, in order to the data to be representative.
- Deviant individuals. When the user has bad or good days in general, independently to the distribution of values for the entire population. A deviant individual represents most likely due to poor or good habits, respectively (e.g., a user suffering from chronic stress, who typically would have poor daily happiness scores/high stress/anxiety scores independently of the data from the population).

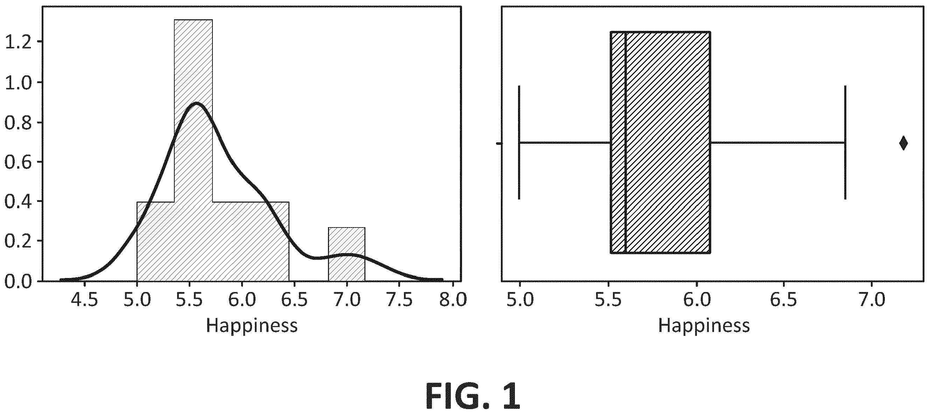

For example, figure 1 shows the distribution (left figure) and box (right figure) plot values of happiness/wellbeing for an individual in an example (without limitation purposes). The distribution plot is a histogram (each bar represents how often each value of the x-axis is found in the individual's distribution). The box plot depicts groups of numerical data (in this case, happiness score) through their quartiles (with lines extending vertically from the boxes indicating variability outside the upper and lower quartiles, while the dots represent outliers); so the box pot similarly shows in a box where the values of the happiness levels concentrate (in this case the box itself represents from 25-75 percentile).

This figure clearly illustrates that the individual will have most days within certain normal values, but some will be outliers. In the specific example of figure 1, it shows that the individual most days scores their happiness at 5.5 (see fig 1 left) where the line in the boxplot (see fig 1 right) shows that the mean value is a bit above 5.5. However, both figures show that this individual had an irregular positive day where he had scored 7 his day (if the user would have scored 5 or less, it would have been an irregular negative day). These days are irregular compared to his/her distribution of values in the past.

The present invention allows to efficiently detect these irregular days for an individual, based on outliers in data obtained passively (without the user interactions) from sensors (for example, by user electronic devices as a phone or a wearable device). The proposed embodiments utilise outliers in monitored features (monitored user's data) only as input; this way many of the prior art limitations are bypassed, and thus a more generic solution can be developed to detect positive and negative outlier days.

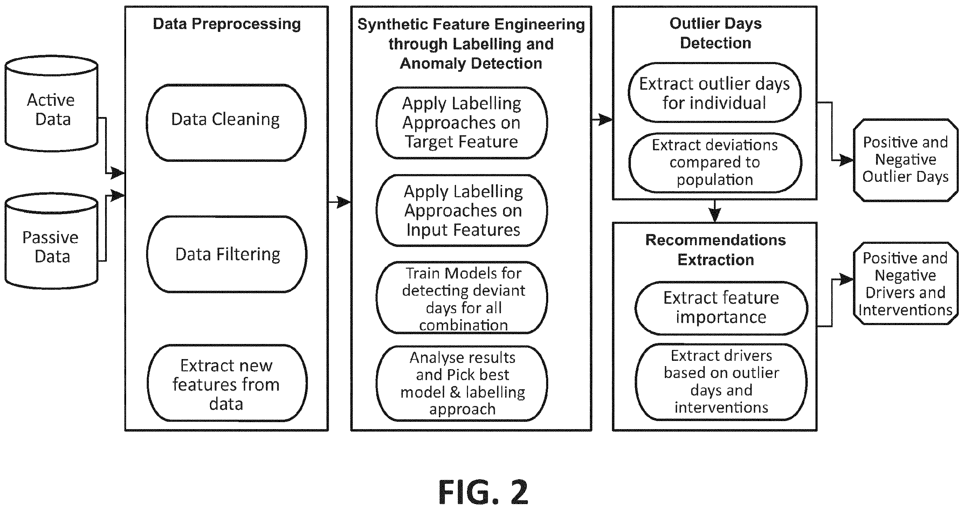

In figure 2, it is shown the main blocks (functional elements) of a system for accurate detection of irregular days of an user (or in other words, for optimal labelling of the user's days as irregular days or regular days) according to an embodiment of the invention. Even though, for simplicity and clarity, the functional elements are shown in figure 2 as isolated blocks, the function of each block can be performed by the same hardware devices (e.g. the same processor/device) or by different devices (e.g. different electronic processors/devices communicated by any communications network). Figure 5 shows, without limitation purposes, a proposed embodiment; not all the blocks (functional elements) shown in figure 2 are mandatory for performing the irregular days detection.

According to an embodiment, the main blocks are:
- Data pre-processing: As previously stated, the detection of user's irregular days will be based in user data (user features), from a particular user and/or from a group of users, preferably a group to which the particular user belongs to. This data is obtained from (measured by) sensors and/or from user electronic devices (for example, usage patterns of users' electronic devices) and sent (for example, through any type of communications network) to the electronic device performing this data pre-processing. This data can be active or passive data:
   Active data will be data asked to the user (usually through an electronic device). For example, it can be asked to the user how anxious he/she feels today.
   Passive data represents data that is collected passively (transparently to the user, without the user having to do any action) by the user electronic device (phone, wearable device...). For example, the location acquired by the location sensor of the phone, the user does not need to input their location manually at each point of time rather just consent that the location will be collected.

In this block, traditional data pre-processing techniques are applied, such as data cleaning and filtering or data imputation. Also extraction of new but typical features from raw data (for example, extracting number of steps from accelerometer data) can be performed.
- Labelling and Anomaly Detection (Synthetic Features Engineering): As it will be more detailed explained later, in this phase, input and target synthetic features (not raw data) are built by applying different labelling approaches. These synthetic features are based on labelling the measured data (from the sensor and/or the electronic devise) as regular or irregular for each day. Additionally, the target feature can be set as future days' values of wellbeing (e.g., anxiety tomorrow, in two weeks, etc.).

Now, for clarity purposes the obtention of the synthetic input and target features will be more detailed explained using a specific example (without limitation purposes). As previously stated, the input features are the (physical, physiological, electronic device usage patterns related, environmental...) features related to the user and/or to a group of users, obtained from electronic sensors or, generally speaking, electronic devices. The target features will be the user features (for example, psychological user features or wellbeing features) which are to be estimated from the input user features (for example, happiness, anxiety, health state...).

For example, imagine that user happiness is predicted from electronic sensors data. In this case, the input features would be the various physiological features related for the user directly obtained from sensors data (e.g., from pedometer it is obtained the user steps count, from light sensor it is obtained light level...). In an example (without limitation purposes), the input features will be the battery level of the user mobile phone, the light level, the steps count and the noise level. From these input features, the happiness level will be obtained (target feature).

From these input and target features, synthetic features will be built which represent whether the input and target features considered, were abnormal during that day (considering the distribution of the input and target features during other days). The distribution of the input and target features taken into account to built the synthetic features can only consider the patterns of the specific individual over time and/or considering the patterns of the group of users (population) under observation distribution.

For example, a synthetic input features will be whether the light-level was abnormal during that day considering the distribution of the light level in general. Similarly, a synthetic target feature can be whether that user had an irregular happy day that day. The values of these features can be for example, a binary value, (0,1) or even in between, if percentiles are considered. For example, in this table 1, it is stated the value of the input features (according to this example) measured by the sensors for different days (for example, the average or the top value for said date) and the estimated value of the target feature happiness (obtained from the input features using any possible algorithm).

**Table 1: Input and Target features:**

| Input features | | | | Target feature |
|---|---|---|---|---|
| Battery_level | Light_level | Steps_count | Noise_level | Happiness_level (between 0 and 10) |
| 85 | 85 | 4000 | 10 | 10 |
| 10 | 20 | 100 | 70 | 2 |
| 10 | 10 | 4000 | 30 | 6 |
| 40 | 40 | 1000 | 60 | 5 |

From these raw data of table 1, the synthetic Input and Target features are computed in table 2. In this example, irregularly low is marked as 0 and irregularly high is marked as 1 and normal is marked as 2. In another embodiment, the normal rows can be removed for training. In the example of table 2, it has been considered that the normal values of battery level and light level are between 25 and 75, for noise level between 20 and 50 dBs, for steps count between 500 and 2000, and for happiness between 3 and 7.

This synthetic features values will be given for training of the machine learning models to predict the irregular days.

**Table 2:**

| Synthetic Input features | | | | Synthetic Target feature |
|---|---|---|---|---|
| Battery_level_synt | Light_level_synt | Steps_count_synt | Noise_level_synt | Happiness_level_synt (between 0 and 10) |
| 1 | 1 | 1 | 0 | 1 |
| 0 | 0 | 0 | 1 | 0 |
| 0 | 0 | 1 | 2 | 2 |
| 2 | 2 | 2 | 1 | 2 |

Following, based on said built features (synthetic features) machine learning models are trained for detecting deviant (not normal) days and the optimal model and labelling technique is selected for the dataset under analysis.
- Outlier days detection: Here the selected model is applied on individual data either based on its own distribution (more anomalies expected) and/or based on the population distribution (less anomalies expected) depending on the use case. That is, the synthetic features (obtained with the optimal labelling technique) for each day under analysis are compared with the usual values for the individual and/or for the group (the population) and from these comparisons the outlier days are detected. These usual (normal) values are obtained from the previous data obtained for the user and from the group in previous days (preferably no-irregular days). The output of these phase is which of the days are outliers with a further indication of whether it is a positive or negative outlier.
- Recommendations extraction: Based on past detected outlier days, it is determined the importance of each feature (input features or target features); in other words, it is determined which features are relevant (more important) for the determination that a day is a positive or negative outlier day. That is, from the selected machine learning model it can be shown that one or more specific features (for example, the number of steps per day or the number of calls per day or any other) is important for predicting whether or not the day is a positive or negative outlier for the person under analysis some specific feature.

Then, both positive and negative drivers (recommendations) are extracted, either based on the input features that has been determined as relevant for a specific user or based on the entire population (deviant individuals). The drivers will be causal drivers or correlations factors to the target features and the irregular days (for example, to the wellbeing/anxiety of the user or to any other user physiological or psychological feature/symptom).

Then, said drivers can be based on user input features identified as relevant. For example, in the example of tables 1 and 2, it may be extracted that a high noise level is linked with this specific individual's low level of wellbeing. In this case, low noise activities will be recommended or the user will be informed about these correlates/drivers between the level of noise and the low wellbeing.

Also the drivers can be extracted based not only in the individual but also on the entire population (group of users) low level or high level days or also based on deviant individuals. Deviant individuals are individuals who always score super high or very low in the target feature (e.g., anxiousness level, happiness). It is interesting to see what are the values of the features for these deviant individuals (or in other words, what said individuals do), to see which features are recommended to avoid (if the deviant individual uses to score very low in the target feature or he/she has many negative irregular days) or which features are recommended to do (if the deviant individual uses to score very high in the target feature or he/she has many positive irregular days). E.g., which locations said individual frequents, which is his/her phone usage patter, his/her light or noise levels etc.).

In an embodiment, the results of the system are made available (for example displayed or stored in an electronic device) to the user or to the clinician analysing the user's behaviour. The shown results can be the obtained positive and negative drivers, the effectiveness of prior drivers applied to the user (prior interventions), different alerts (for example, when an irregular day is detected or when the number of irregular days detected is above a threshold), history charts... or any other data obtained from the system results, which can be useful to the user or to the clinician.

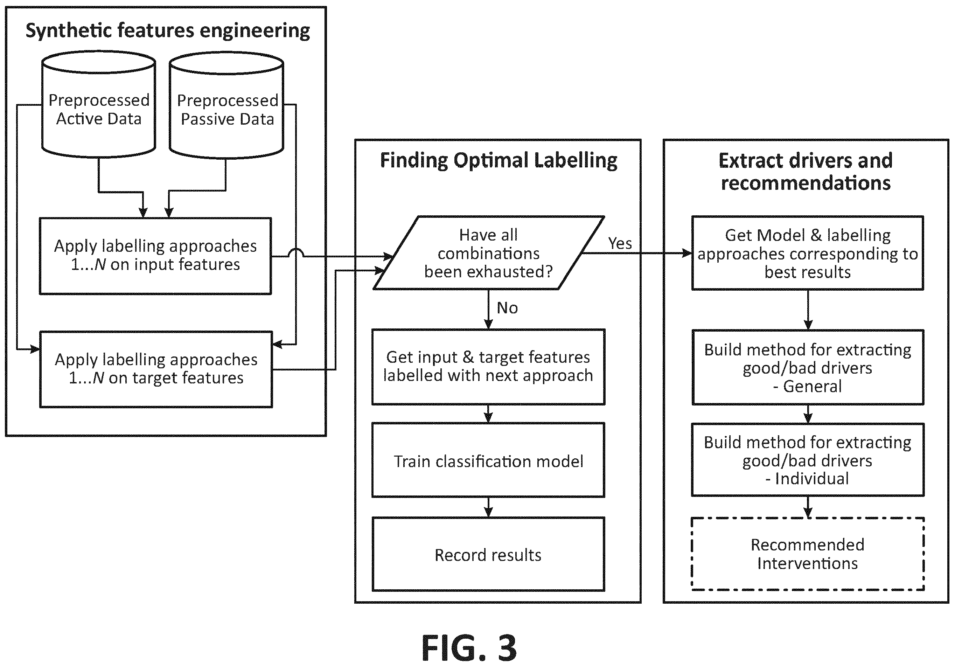

Now, for clarity reasons, the operation of the proposed system, according to an embodiment of the invention, will be explained in more detail. Figure 3 shows a flow diagram schematically showing the proposed solution, according to an embodiment of the invention.
1. Synthetic features engineering: As previously explained, the active and/or passive user data (from the particular user and/or from a group of users) obtained from sensors and/or from user electronic devices, is pre-processed (data cleaning, filtering...). Given a pre-processed dataset (input data), several labelling approaches are applied on the source features (input features) and, afterwards, to the target feature for building the training dataset (in an embodiment, multiple prior values from past days could be also used as input features). Generally speaking, N (N>1) labelling approaches are applied to each dataset of each feature, obtaining therefore N labels (synthetic features), one per labelling approach used, for each dataset; where N is a design parameter. The following is an example, without limitation purposes, of the labelling approaches which can be applied to obtain the synthetic input and target features:
   - Labelling approach 1 to 3: For each feature, data whose value under the i and 100-i percentile (of the values distribution used for comparison) are labelled accordingly as negative or positive outliers respectively, where i is a design parameter, and typically i ∈ {10,20,30} for approaches 1, 2 and 3 respectively (this is only an example and other values of i, are possible). That is, depending on where the data under analysis belong in the distribution of values for the corresponding feature used as basis for comparison, the dataset for a day will be labelled as positive or negative. The distribution of values used for the comparison can be, for example, the data values for said feature from other (usually past) days of the specific user or the data values from the group of users distribution (for the same day or from different days).
   - Labelling approach 4 to 6: For each feature, data whose value belongs to over j standard deviations from the mean or median of the values distribution used for comparison (i.e., mean/median ± j *σ, where σ is the standard deviation) will be labelled as negative or positive outliers depending on their positioning; where j is a design parameter and typically j ∈ {1,2,3} for approaches 4, 5 and 6 respectively (this is only an example and other values of j, are possible). As before, the distribution of values used for the comparison can be, for example, the data values for said feature from other (usually past) days of the specific user or the data values from the group of users distribution (for the same day or from different days).
   - Labelling approach 7 - Absolute threshold:
      ∘ Fixed: Considering a value [I, h], a fixed threshold can be applied as t such that data whose values are within [I, I+t] and [h-t, h] are labelled as negative or positive outliers, respectively. t is a design parameter.
      ∘ Variable: Considering the variance of values for each individual, a threshold computed as a function of that variable is used to la label a certain data as negative or positive outliers in order to allow for a variable rather than fixed thresholding approach given that users can mark very differently their days.
   Using percentiles and statistic values instead of absolute values when it comes to extracting features (i.e. parameters) that are used as an input into the models, is a very novel approach. The typical approaches of using absolute values (e.g., daily mean of heart-rate, sleep hours, daily time at home/at work, daily time with friends, daily ambient temperature, etc.) as input parameters, don't capture individual differences well (e.g., an outlier for a user 1 may mean a mean value for a user 2). Therefore, using percentiles and statistic values instead of absolute values, the method captures more accurately a differentiation between users with less captured data (so resources are saved).
   The dataset (distribution of values) considered for this labelling approach, may belong either to a) a single individual or b) entire population (group of users) for the purpose of a) detecting outlier days and personalized interventions for a user, and b) detecting individuals who always have outlier days compared to the entire population and thus extracting general good or bad drivers that could be applicable to other individuals, respectively.
2. Find optimal labelling approach for each source and target feature utilizing the outlier labelled features only by (note the labelling approach can be different depending on the individual in the sample population):
   a. Use input and target features labelled by one of the labelling approaches from 1 (that is, the synthetic features). As an alternative, a brute-force approach can be tried where all labelling approaches are applied on the input features and they are used in an ensemble to automatically learn the optimal labelling approach.
   b. Train machine learning classification model with the data labelled using this approach (that is, the obtained synthetic features) with grid-search for optimizing the parameters. The models are created by supervised machine-learning classification algorithms, such as Bayesian Networks, Linear Regression, Support Vector Machines, Decision Trees (e.g. XGBOOST, Random Forests, ...), Hidden Markov Models or any other algorithm. The model can be tuned to balance precision. In a preferred embodiment the techniques used are XGBoost due to its flexibility and general performance, or logistic regression.
   c. Record the results of the machine learning model for said synthetic features obtained using said labelling approach.
   d. Repeat a-c for a different labelling approach (or combination of labelling approaches) until all labelling approaches results are recorded.
   e. For each feature, select the optimal labelling approach. The optimal labelling approach may be the approach, and consequently the corresponding synthetic feature, that reached the best results in terms of model performance (e.g., f1-score, precision, recall, AUC), that is, in term of machine learning performance. For this selection, it may be taken into account the accuracy of the labelling approaches for previously detected irregular days detection.
3. Once, the machine learning model and labelling approach corresponding to the best results are obtained, the positive and negative outlier days are obtained (for example, depending of the synthetic target features values). And then, drivers are extracted from the days that were labelled good/bad.
4. From the drivers obtained in 3 for a single user or for an entire group of users (population), formulate new interventions based on the obtained drivers.

In a different embodiment, the method can try all combinations of outliers labelling methods as input features to a model that would learn automatically which combinations of labelling approaches reach highest levels of accuracy.

In an embodiment, the machine learning model can take into account beside outliers in monitored data, statistics based on the positioning of the dataset under analysis in the distribution of values of the input features.

In tables 3 and 4, it is shown the initial experimental results for varying the labelling approaches for user happiness and for user anxiety respectively, according to an embodiment of the invention. For modelling purposes, XGBoost and Logistic Regression were considered as machine learning techniques, due to their flexibility and general performance. For XGBoost, early stopping on log-loss was used with 10 as number of rounds with leave one user out as cross validation. For logistic regression, grid search was used for determining the regularisation parameter C. SMOTE was used for oversampling the minority class.

The labelling approaches that were explored in the initial results presented below are: a) 3 standard deviations from the mean (j=3), b) 2 standard deviations from the mean (j=3), c) 30 percentile (i=30), d) 20 percentile (i=20), e) 10 percentile (i=10). Data was labelled accordingly as 0 (sad), 1 (happy), 2 (normal); and binary classification was attempted for both: happy vs sad days, and normal versus sad days. The target Normal vs Sad, means that only days where the synthetic features were labelled as normal or sad, have been used in the training (to detect only the irregular negative/sad days). The target Sad vs. Happy means that only days where the synthetic features were sad or happy have been used in the training.

In this example, the models are trained using multiple types of features. The feature types are Passive, Active and Onboarding. The Passive group comprises of features computed from data collected by phone sensors (e.g. accelerometer, noise, light, pedometer, battery, GPS), the Active group comprises of features computed from the users' reports of Activities, the Onboarding group comprises of features computed from users' answers to the onboarding questionnaires (including demographic data). For some of the models more than one type of features is used. Utilising only users that completed more than 10 days of the study, or setting a minimum of 2 points as absolute difference between happiness scores did not improve the results.

Thus, from tables 3 and 4 below, it becomes evident the need for the proposed solution for detecting automatically the optimal labelling approach for the dataset and individuals under consideration. It is also observed that the top three results for both scenarios (happiness, table 3, and anxiety, table 4) were reached through a combination of labelling approaches, different between the inputs and the target features. Note that depending on the dataset (i.e. on the feature), the optimal labelling approach may differ.

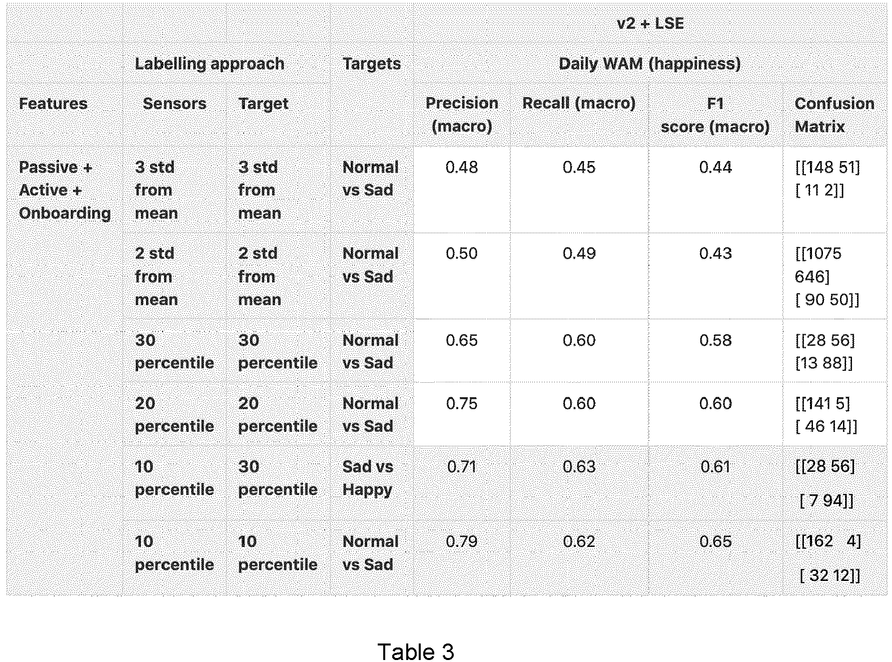

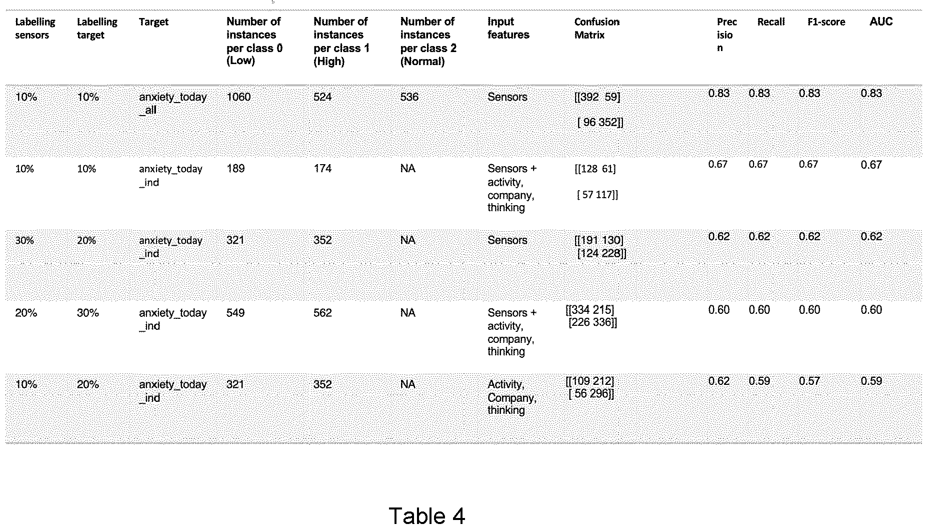

Through the combination of the features of the disclosed embodiments, the following advantages (among others) over the existing prior art are achieved:
- The outlier days are passively inferred from outliers of input features, in this case not using raw values.
- The optimal labelling approach is applied and thus reach higher accuracy for detecting outlier days.
- Personalized drivers of behaviour are extracted both from the entire population (group) but also from each individuals' outlier days.

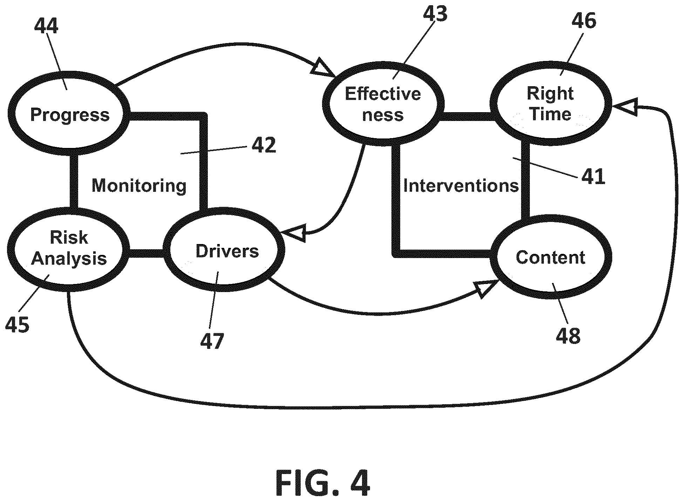

Figure 4 shows several examples of possible issues/actions (and the interactions between said issues/actions) which can be performed thanks to the the proposed embodiments for detecting outlier days (e.g., exceptionally good or bad days):
- Passive assessment of interventions (41): Monitoring the user behaviour and inferring his/her outlier days (42) before and after an intervention can give an indication of whether the intervention has been successful, that is, of the effectiveness (43) of the intervention (e.g., inferring good/bad days in terms of stress before and after stress relieving interventions)
- Monitoring the user behaviour detecting his/her outlier days (42) and provide a day to day progression visualization (44), e.g., to clinicians/customers, internal evaluations...
- Because of the relationship between wellbeing and clinical conditions such as anxiety and depression, detecting exceptionally good or bad days for a user can help us in identifying individuals who are at risk (45) of developing clinical conditions. Similarly, it can be used for example to detect acute vs chronic stress.
- Identifying and anticipating when a user is having a worse day than normal could benefit the right time (46) to intervene.
- Factors which influence the good or bad days can be discovered.
- The activities people performed during bad and good days can serve as guidelines for the interventions as good/bad drivers (47) for the users' behaviour can be identified. Said good/bad drivers can be used as the content (48) on which a possible intervention (41) for improving the user's life is based.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A computer implemented method for efficiently detecting outlier days of a user belonging to a group of users, the method comprising:
a) Receiving datasets of one or more features related to the user and/or to the group of users corresponding to one or more days under analysis, where at least one of said datasets have been acquired by one or more user electronic devices;
b) Labelling the dataset of each feature as regular or irregular for each day applying N labelling approaches, N>1, obtaining N labels for each dataset of each feature; where at least one of the labelling approaches comprises comparing the dataset of each feature with the values distribution of previously obtained datasets for said feature for the user or for the group of users;
c) For each labelling approach of the N labelling approaches of step b), use the obtained labels to train one or more machine learning classification models;
d) Selecting for each feature, based at least on the results of the one or more machine learning classification models, an optimal labelling approach from the N labelling approaches;
e) Determining, at least based on the labels obtained with the optimal labelling approach for each feature, whether the one or more days under analysis are outlier days for the user.

2. The method according to any of the previous claims where the one or more features of step a) includes one or more of: usage patterns of the use of user electronic devices by the user and/or by the users of the group or users, ambient data related to location of the user or of the users of the group of users, environmental data related to the location of the user or of the users of the group of users, physiological data of the body of the user or of each user of the group of users and/or behavioural data of the user or of the users of the group of users.

3. A method according to claim 2 where the environmental data are values of at least one of the following parameters: pollution, outdoor light level, light level, weather, humidity, outdoor temperature; the behavioural data are values of at least one of the following parameters; mobility, social interactions, sleep state; the physiological data are values of at least one of the following parameters of the body: galvanic skin response, heart rate variability, skin temperature; and the ambient data are values of at least one of the following parameters: indoor temperature, indoor light level, light exposure, noise level.

4. A method according to any of the previous claims where at least one of the labelling approaches comprises comparing each dataset with the i and/or 100-i percentile of the values distribution of previously obtained datasets for said feature for the user or for the group of users, where i is a design parameter.

5. A method according to any of the previous claims where at least one of the labelling approaches comprises comparing each dataset with the mean or median of the values distribution of previously obtained datasets for said feature for the user or for the group of users.

6. A method according to any of the previous claims where at least one of the labelling approaches comprises comparing each dataset with the variance of the values distribution of previously obtained datasets for said feature for the user or for the group of users.

7. A method according to any of the previous claims where the method further comprises: determining whether a day determined in step e) as an outlier day is a positive or a negative outlier day.

8. A method according to any of the previous claims where the one or more features of step a) includes at least one wellbeing feature of the user or of the group of users, estimated from one or more of the receiving datasets measured by one or more user electronic devices.

9. A method according to any of the previous claims where the method further comprises: determining the relevancy of the features whose data is received in step a) for the determination that a day is an outlier day made in step e); and deriving user recommendations based on the determined relevancy for each feature.

10. A method according to any of the previous claims, where the method is performed in a remote electronic device and the one or more user electronic devices acquiring the datasets of features related to the user or to the group of users, send through a communications network the acquired data to the remote electronic device.

11. The method according to any of the previous claims the datasets acquired in step a) includes data collected by electronic sensors located in a user electronic device of the user or in user electronic devices of the group of users.

12. A method according to any of the previous claims where the user electronic devices are one of the following: laptops, tablets, personal computers, portable computers, mobile phones, smartwatches or smartphones.

13. A method according to any of the previous claims where the datasets are acquired using at least one of the following electronic devices: usage logs or sensors embedded in a user communications device, wearable electronic devices with sensors to measure body signals, presence sensors, location sensors, smart environments devices, bed-sensors, environment sensors to monitor environment parameters such as temperature, air quality or weather information.

14. An electronic system for efficiently detecting outlier days of a user belonging to a group of users, the system comprising:
- Communication means for receiving, through one or more communications network, datasets of one or more features related to the user and/or to the group of users corresponding to one or more days under analysis, where at least one of said datasets have been acquired by one or more user electronic devices;
- Processing means configured to:
- Label the dataset of each feature as regular or irregular for each day applying N labelling approaches, N>1, obtaining therefore N labels for each dataset for each feature; where at least one of the labelling approaches comprises comparing the dataset of each feature with the values distribution of previously obtained datasets for said feature for the user or for the group of users;
- For each labelling approach, use the obtained labels to train one or more machine learning classification models;
- Select, based at least on the results of the one or more of the machine learning classification models, an optimal labelling approach from the N labelling approaches for each feature;
- Determine, based at least on the labels obtained with the optimal labelling approach for the datasets, whether the one or more days under analysis is an outlier day for the user.

15. A non-transitory computer readable medium, comprising instructions for causing a computer device to perform the method of any of the claims 1-13.
